# EUROPÄISCHE PATENTSCHRIFT

(11) **EP 1 142 691 B1**
(45) Veröffentlichungstag und Bekanntmachung des Hinweises auf die Patenterteilung: **12.05.2004**
(21) Anmeldenummer: 01107970.4
(22) Anmeldetag: 29.03.2001
(51) Int. Cl.: B29C 51/32, B26F 1/18

(54) **Verfahren zum Herstellen eines Behälters aus einer thermoplastische Kunststofffolie und kombiniertes Form-/Stanzwerkzeug zur Durchführung des Verfahrens**
Method for producing a container made of a thermoplastic foil and combined forming and cutting tool for carrying out said method
Procédé pour la fabrication d'un récipient en feuille thermoplastique et machine de formage et poinçonnage combinée pour mettre ledit procédé en oeuvre

(30) Priorität: 05.04.2000 DE 10017042
(43) Veröffentlichungstag der Anmeldung: 10.10.2001
(73) Patentinhaber: Adolf Illig Maschinenbau GmbH & Co. KG, 74081 Heilbronn (DE)
(72) Erfinder: Gebhard, Walter, 74078 Heilbronn-Frankenbach (DE)

(56) Entgegenhaltungen:
- DE-A- 4 430 824
- DE-A- 19 741 882
- DE-C- 3 109 415

## Beschreibung

Die Erfindung betrifft ein Verfahren zum Herstellen eines Behälters aus einer thermoplastischen Kunststofffolie mittels eines kombinierten Form-/Stanzwerkzeuges nach der Gattung des Hauptanspruches sowie das kombinierte Form-/Stanzwerkzeug zur Durchführung des Verfahrens.

Aus der DE 31 09 415 C2 ist eine gattungsbildende Vorrichtung bekannt, bei der Behälter in einer Station aus einer thermoplastischen Kunststofffolie tiefgezogen und anschließend ausgestanzt werden. Der Behälterrand ist bei dieser Vorrichtung eben geformt. Durch eine andere Gestaltung des Schnittstempels werden in gleicher Weise Behälter mit u-förmigem Rand hergestellt.

Aus der EP 0 906 871 A1 ist es bekannt, in den Behälterrand während des Tiefziehprozesses eine umlaufende Nut einzuformen, indem ein Werkzeugteil, das diesen Rand einspannt, entsprechend gestaltet ist.

Die DE 44 32 296 A1 zeigt ein reines Formwerkzeug, bei dem mittels - am formgebenden Teil des Formwerkzeuges angeordneten - Schneidkanten ringsum verlaufende Schwächungslinien in eine Klappverpackung eingeformt werden, um den Rand einer versiegelten Verpackung abreißen zu können. Die Schneidkanten durchdringen das Kunststoffmaterial nur zum Teil, sind rings um das formgebende Teil des Formwerkzeuges angeordnet und wirken mit einer nicht dargestellten Gegenbacke zusammen. Anregungen zur Durchführung des beanspruchten Verfahrens und zur entsprechenden Gestaltung eines kombinierten Form-/Stanzwerkzeuges sind dieser Veröffentlichung nicht zu entnehmen.

Mit keinem der genannten Verfahren ist das Einbringen eines oder mehrerer Schlitze im flachen Randbereich eines Behälters möglich. Werden solche Schlitze gewünscht, z. B. um bei Behältern, die als Blumentopf Verwendung finden, ein von vom lesbares Etikett mit dem Namen der eingetopften Pflanze einstecken zu können, werden diese Schlitze in einem separaten Stanzwerkzeug eingestanzt.

Dies ist sehr umständlich, da bei der Massenfertigung solcher Behälter eine Überführung der Behälter z. B. auf ein umlaufendes getaktetes Palettenband erforderlich ist, in dessen Bereich eine Stanze angeordnet ist. Ein solches Verfahren zeigt die DE 42 44 977 C 2. Die erforderliche Vorrichtung ist sehr aufwendig und benötigt viel Platz. Durch die notwendige Übemahme der Behälter aus dem Form-/Stanzwerkzeug und durch die Übergabe auf das Palettenband ist das Verfahren störungsanfällig.

Der Erfindung liegt die Aufgabe zugrunde, das Verfahren so auszubilden, dass im kombinierten Form-/Stanzwerkzeug während der Herstellung des Behälters auch eine Schlitzung des Behälterrandes an einer oder mehreren Stellen vorgenommen wird. Nachfolgende Stanzeinrichtungen mit entsprechenden Übergabe-einrichtungen sollten dadurch nicht erforderlich sein. Das Verfahren sollte nur geringe Mehrkosten des Formwerkzeuges zur Folge haben und keine über Antriebe separat bewegte Teile zur Herstellung der Schlitze erfordem.

Diese Aufgabe wird gelöst durch die Merkmale der Ansprüche 1 und 5. Hinsichtlich vorteilhafter Weiterbildungen wird auf die Unteransprüche verwiesen.

Das Form-/Stanzwerkzeug zur Durchführung des Verfahrens ist anhand der schematischen Zeichnungen näher beschrieben. Es zeigt:

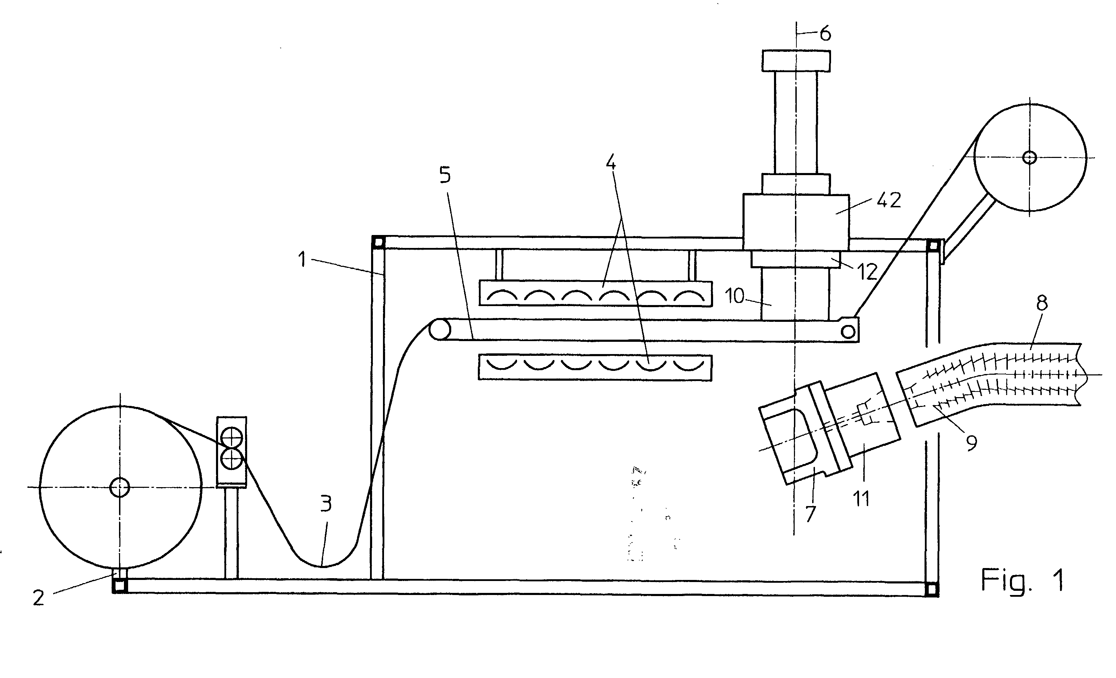

- Figur 1: eine Seitenansicht einer Thermoformmaschine zum Einbau des Form-/Stanzwerkzeuges.
- Figur 2: einen Schnitt durch das Form-/Stanzwerkzeug.

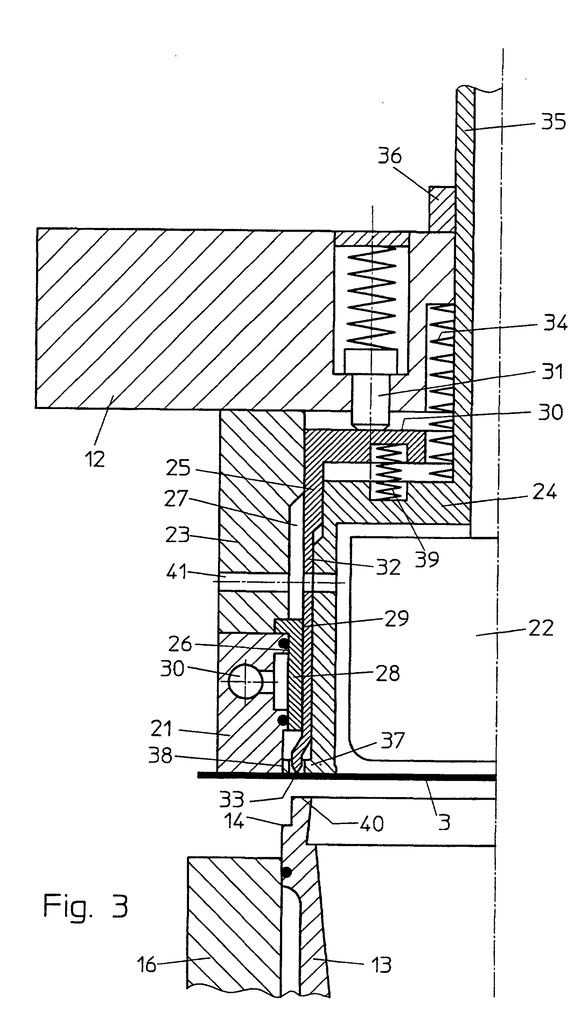

- Figur 3: eine vergrößerte Darstellung eines Bereiches des Form-/Stanzwerkzeuges.
- Figuren 4-6: vergrößert dargestellt verschiedene Phasen des Verfahrensablaufes.
- Figur 7: eine Variante des Form-/Stanzwerkzeuges für eine Variante des Verfahrens.
- Figuren 8 - 10: Variationen des Form-/Stanzwerkzeuges im Bereich der Schneidkanten.

In einem Gestell 1 sind die wesentlichen Teile der Thermoformmaschine untergebracht, in die das kombinierte Form-/Stanzwerkzeug zur Durchführung des Verfahrens eingebaut wird. Eine Rollenaufnahme 2 steht eingangsseitig und entfällt, wenn die zu verformende Folienbahn 3 aus thermoplastischem Kunststoff direkt von einem Extruder zugeführt wird. Auch die Heizeinrichtung 4 ist bei Extruderverkettung eventuell nicht erforderlich. Eine intermittierend betriebene Transporteinrichtung 5 führt die Folienbahn 3 zu einer Formstation 6 mit Untertisch 7 und Obertisch 42, in der mittels Druckluft oder Vakuum Behälter 9 mittels des kombinierten Form-/Stanzwerkzeuges, bestehend aus Oberteil 10 und Unterteil 11, geformt und ausgestanzt werden. Nach dem Absenken und ggf. Schwenken des Formtisches 7 mit dem formgebenden Unterteil 11 werden die Behälter 9 in Stapelrinnen 8 ausgestoßen oder in entsprechende Nachfolgeeinrichtungen übergeben.

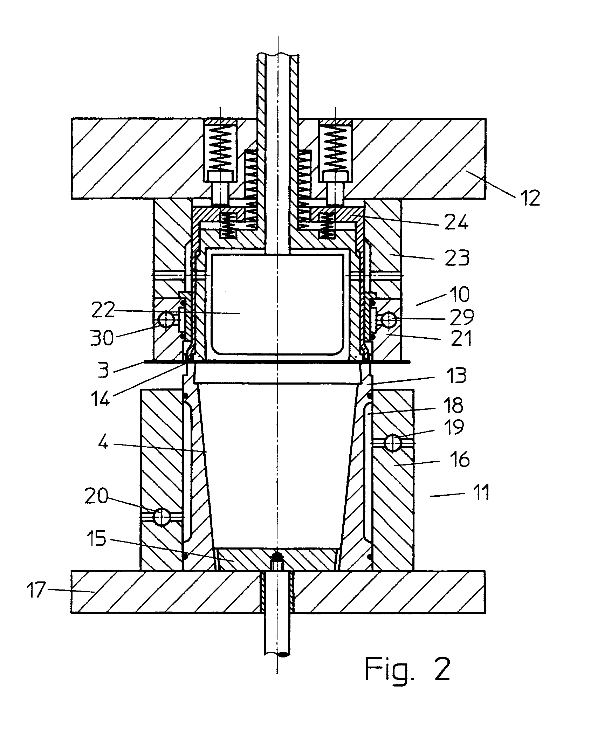

Figur 2 zeigt den Aufbau des Form-/Stanzwerkzeuges. Das Unterteil 11 weist pro Formnest einen Schnittstempel 13 mit einer Schnittkante 14 und einen höhenbeweglichen Formboden 15 auf, ferner eine Aufnahme 16 und die Grundplatte 17. Im Schnittstempel 13 kann ein Formeinsatz eingesetzt sein, der der Form des Behälters 9 entspricht. Schnittstempel 13 und Formeinsatz können aber auch einstückig ausgebildet sein wie in Figur 2 dargestellt. Zwischen Schnittstempel 13 und Aufnahme 16 ist eine Kühlkammer 18 zur Kühlung der geformten Behälter 9 eingearbeitet, die mit einer Wasserzuführung 19 und einer Wasserableitung 20 verbunden ist.

Das Oberteil 10 setzt sich zusammen aus der Matrize 21, der Kopfplatte 12 und der Zwischenplatte 23, in die die einzelnen Formnester eingearbeitet sind - einreihig wie dargestellt oder mehrreihig. Dazu weisen Matrize 21 und Zwischenplatte 23 Bohrungen 26, 27 auf. In die Bohrung 26 in der Matrize 21 wird eine Kühlbuchse 28 eingesetzt, die über Kühlwasser, zugeführt und abgeführt über Bohrungen 29, 30, gekühlt wird. Auf der Innenfläche 29 der Kühlbuchse 28 gleitet die Außenfläche des Topfes 25, dessen Seitenwand 32 ferner in der Bohrung 27 in der Zwischenplatte 23 geführt ist. Auf dem Boden 30 des Topfes 25 stützen sich mehrere gefederte Bolzen 31 ab, sodass der Topf 25 nach oben gefedert abgestützt wird. An der Unterseite ist die Seitenwand 32 des Topfes 25 an einer oder an mehreren Stellen ihres Umfanges als Schneidkante 33 ausgebildet.
Innerhalb des Topfes 25 ist ein über Federn 34 nach unten gedrückter Niederhalter 24 angeordnet, dessen Schaft 35 nach außen ragt und der eine Anschlagmutter 36 trägt. An der der Folienbahn 3 zugewandten Seite weist der Niederhalter 24 einen Bund 37 auf, der sich bis zur Stanzkontur 38 in der Matrize 21 erstreckt. Zur Durchführung der Schneidkante 33 ist er örtlich entsprechend ausgespart. Zwischen Niederhalter 24 und Boden 30 des Topfes 25 sind Federn 39 angeordnet, sodass der Topf 25 immer gegen die Bolzen 31 gedrückt wird und dabei eine Relativbewegung zwischen Topf 25 und Niederhalter 24 möglich ist.

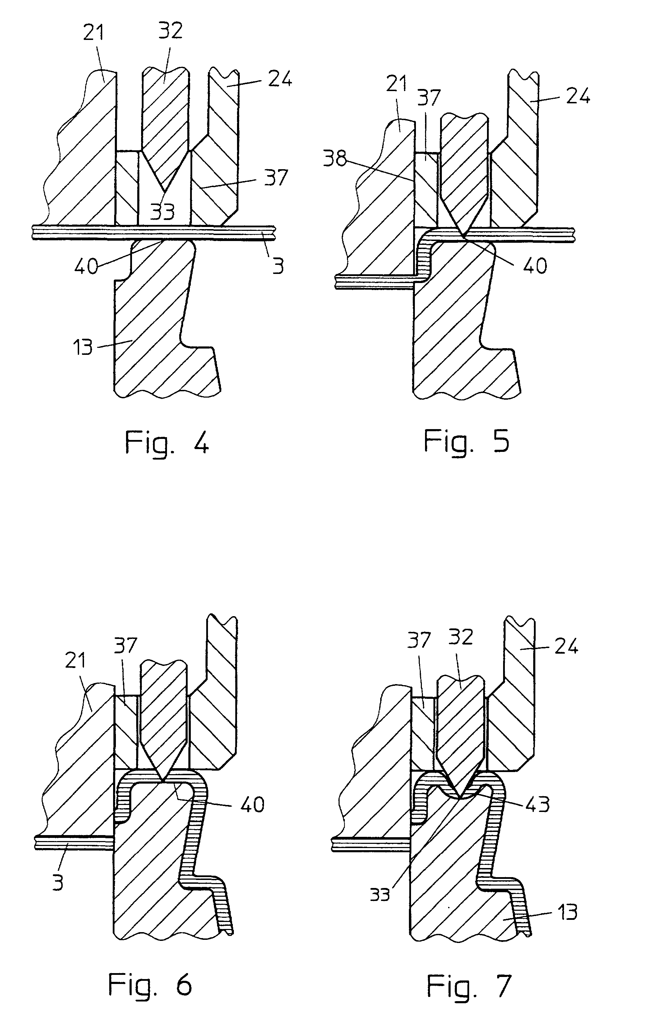

Der Verfahrensablauf ist wie folgt.
Nach dem Eintransport eines erwärmten Abschnittes der Folienbahn 3 zwischen das geöffnete Form/Stanzwerkzeug wird das Form/Stanzwerkzeug geschlossen. Dabei trifft zuerst die flache Oberseite 40 des Schnittstempels 13 gegen die Folienbahn 3 und drückt diese gegen die Unterseite des Bundes 37 des Niederhalters 24 ( Figur 4 ). Der Niederhalter 24 gibt gegen die Kraft der Feder 34 nach und örtlich kommen die Schneidkanten 33 in Einsatz und trennen die Folienbahn 3 zumindest teilweise durch. Die Schnittkante 14 durchtrennt die Folienbahn 3 bis auf wenige Zehntel Millimeter ( Figur 5 ). Es folgt in bekannter Weise das Ausformen der Behälter 9 durch mechanische Vorstreckung mittels des Streckhelfers 22 und/oder durch Druckluftzufuhr über den Anschluss 41 ins Innere des Form/Stanzwerkzeuges. Ein weiterer geringer Stanzhub führt zum Ausstanzen des Behälters 9 und ggf. zum restlichen Durchtrennen des Schlitzes bzw. der Schlitze im Behälterrand ( Figur 6). Ob ein ganzes Durchtrennen oder nur ein teilweises Durchtrennen erfolgt ist abhängig von der Lage der Schnittkante 33 in geschlossener Stellung des Form/Stanzwerkzeuges und ist einstellbar über die Schließlage des Form/Stanzwerkzeuges. Diese kann durch Einstellung des Formtisches 7 oder durch entsprechende Einstellung des Obertisches 42 vorgenommen werden.

Figur 7 zeigt eine besondere Ausbildung des Verfahrens in der Weise, dass der Bereich des Behälterrandes, in den ein Schlitz eingeformt wird, nicht eben gestaltet ist sondem in Richtung des Schnittstempels 13 taschenförmig verformt wird. Dazu weist der Schnittstempel 13 entsprechende taschenförmige Aussparungen 43 auf. Beim Schließen des Form/Stanzwerkzeuges verformt die Schneidkante 33 die Folienbahn 3 in diese Aussparung 43 hinein. Durch diese Verformung wird der Behälterrand im Bereich der Schlitze zusätzlich versteift und das Einführen eines Etikettes in den Schlitz wird erleichtert, da diese Vertiefung eine Zentrierung bildet.

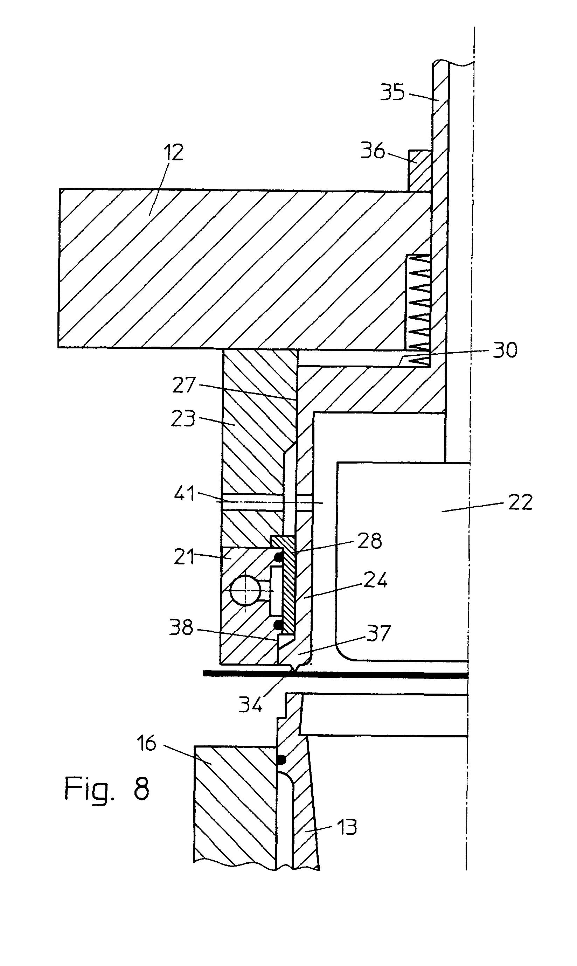

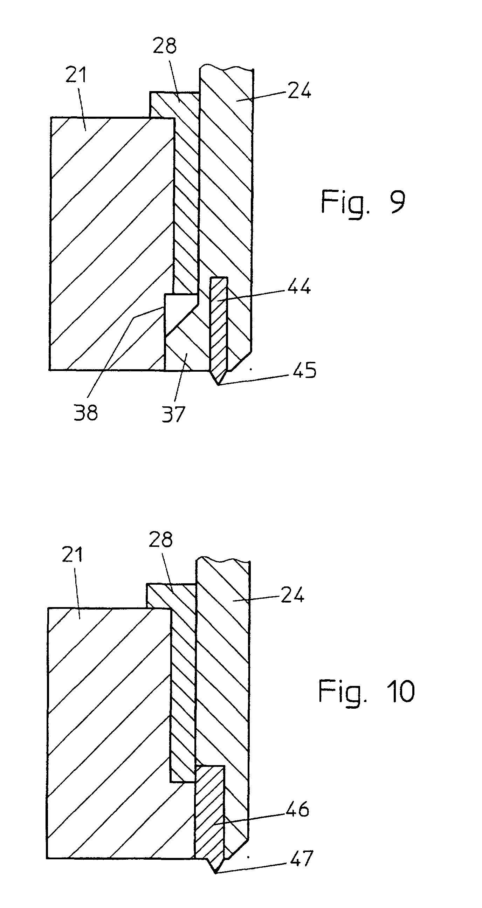

Figur 8 zeigt die Anordnung von Schneidkanten 34 direkt am Bund 37 des Niederhalters 24, der entsprechend einstückig gestaltet ist. Vorteile bezüglich Auswechselbarkeit zerstörter Schneidkanten bietet die Lösung gemäß Figur 9, bei der vorgeschlagen wird, in den Bund 37 des Niederhalters 24 örtlich Schneidmesser 44 mit Schneidkanten 45 einzusetzen.

Eine andere Lösung bezüglich Auswechselbarkeit zeigt Figur 10. Am unteren Ende des Niederhalters 24 wird ein Ring 46 aufgesetzt, der örtlich vorstehende Schneidkanten 47 aufweist. Dieser Ring 46 kann bei Bedarf als Ganzes gewechselt werden. Die Bearbeitung des Niederhalters 24 ist auf diese Weise einfacher als bei der Lösung nach Figur 9.

## Patentansprüche

1. Verfahren zum Herstellen eines Behälters (9) aus einer thermoplastischen Kunststofffolie mittels eines kombinierten Form-/Stanzwerkzeuges, bei dem ein Abschnitt einer erwärmten Folienbahn (3) durch Schließen des Form-/Stanzwerkzeuges eingespannt, durch Differenzdruck der Behälter (9) verformt, durch einen Stanzhub des Form-/Stanzwerkzeuges ausgetrennt und aus diesem ausgeworfen wird, **dadurch gekennzeichnet, dass** der Behälterrand beim Schließen des Form-/Stanzwerkzeuges örtlich durch Zusammenwirken von einem oder mehreren Schneidkanten (33), die innerhalb der Stanzkontur (38) in der Matrize (21) angeordnet sind, mit der Oberseite (40) des Schnittstempels (13) eingeschnitten wird.

2. Verfahren nach Anspruch 1 **dadurch gekennzeichnet, dass** das Einschneiden beim Schließen des Form-/Stanzwerkzeuges über die ganze Dicke der den Behälterrand bildenden Kunststofffolie (3) erfolgt.

3. Verfahren nach Anspruch 1 **dadurch gekennzeichnet, dass** das Einschneiden beim Schließen des Form-/Stanzwerkzeuges über einen Teilbereich der Dicke der den Behälterrand bildenden Kunststofffolie (3) erfolgt und beim Ausstanzen der Behälter (9) die restliche Foliendicke durchtrennt wird.

4. Verfahren nach einem der Ansprüche 1 bis 3 **dadurch gekennzeichnet, dass** beim Schließen des Form-/Stanzwerkzeuges eine Verformung des zu durchtrennenden Bereichs der Kunststofffolie (3) in eine taschenartige Aussparung (43) im Schnittstempel (13) erfolgt.

5. Form-/Stanzwerkzeug zur Durchführung des Verfahrens nach einem der Ansprüche 1 bis 4, bestehend aus einem Unterteil (11) mit den formgebenden Teilen und Schnittstempeln (13) und einem Oberteil (10) mit einer Matrize (21) mit entsprechenden Stanzkonturen, **gekennzeichnet durch** innerhalb jeder Stanzkontur (38) an einer oder mehreren Stellen des Oberteils (10) angeordnete Schneidkanten (33,43,45,47) gegenüberliegend der Oberseite (40) der im Innern die Form der Behälter (9) aufweisenden Schnittstempel (13).

6. Form-/Stanzwerkzeug nach Anspruch 5 **dadurch gekennzeichnet, dass** die Schneidkanten (33) an der Unterseite der Seitenwand (32) eines Topfes (25) angeordnet sind.

7. Form-/Stanzwerkzeug nach Anspruch 6 **dadurch gekennzeichnet, dass** die Seitenwand (32) des Topfes (25) auf der Außenkontur des im Topf (25) angeordneten Niederhalters (24) geführt ist und der Niederhalter (24) einen bis zur Stanzkontur (38) reichenden Bund (37) mit Aussparungen im Bereich der Schneidkanten (33) aufweist.

8. Form-/Stanzwerkzeug nach Anspruch 6 oder 7 **dadurch gekennzeichnet, dass** der Topf (25) nachgiebig gefedert im Oberteil (10) gehalten ist.

9. Form-/Stanzwerkzeug nach einem der Ansprüche 6 bis 8 **dadurch gekennzeichnet, dass** zwischen Niederhalter (24) und Boden (30) des Topfes (25) Federn (39) angeordnet sind.

10. Form/Stanzwerkzeug nach Anspruch 5 **dadurch gekennzeichnet, dass** die Schneidkanten (43) direkt am Bund (37) des Niederhalters (24) angeordnet sind.

11. Form/Stanzwerkzeug nach Anspruch 5 **dadurch gekennzeichnet, dass** die Schneidkanten (45) Teil von örtlich in den Bund (37) des Niederhalters (24) eingesetzten Schneidmessem (44) sind.

12. Form/Stanzwerkzeug nach Anspruch 5 **dadurch gekennzeichnet dass** die Schneidkanten (47) Teil eines auf die Unterseite des Niederhalters (24) aufgesetzten Ringes (46) sind.

## Claims

1. Method of producing a container (9) from a thermoplastic plastics material film by means of a combined moulding and punching tool, in which a section of heated foil strip (3) is clamped in place by closing the moulding and punching tool, deformed to form the containers (9) by differential pressure, separated by a punching stroke of the moulding and punching tool and ejected therefrom, **characterised in that** the container edge on closing the moulding and punching tool is locally cut into by the upper side (40) of the cutting ram (13) by co-operation of one or more cutting edges (33) arranged in the die (21) within the punching profile (38).

2. Method according to claim 1, **characterised in that** the cutting into on closing of the moulding and punching tool is effected over the entire thickness of the plastics material film (3) forming the container edge.

3. Method according to claim 1, **characterised in that** the cutting into on closing of the moulding and punching tool is effected over a part region of the thickness of the plastics material film (3) forming the container edge and the remaining film thickness is cut through on punching out of the containers (9).

4. Method according to one of claims 1 to 3, **characterised in that** on closing of the moulding and punching tool a deforming of the region, which is to be cut through, of the plastics material film (3) into a pocket-like recess (43) in the cutting ram (13) takes place.

5. Moulding and punching tool for carrying out the method according to one of claims 1 to 4, consisting of a lower part (11) with the shape-imparting parts and cutting rams (13) and an upper part (10) with a die (21) with corresponding punching profiles, **characterised by** cutting edges (33, 43, 45, 47), which are arranged within each punching profile (38) at one or more locations of the upper part (10), opposite the upper side (40) of the cutting ram (13) having, in the interior, the shape of the container (9).

6. Moulding and punching tool according to claim 5, **characterised in that** the cutting edges (33) are arranged at the underside of the side wall (32) of a pot (25).

7. Moulding and punching tool according to claim 6, **characterised in that** the side wall (32) of the pot (25) is guided on the outer profile of the holding-down device (24) arranged in the pot (25) and the holding-down device (24) has a collar (37), which reaches up to the punching profile (38), with recesses in the region of the cutting edges (33).

8. Moulding and punching tool according to claim 6 or 7, **characterised in that** the pot (25) is mounted in the upper part (10) to be resiliently yielding.

9. Moulding and punching tool according to one of claims 6 to 8, **characterised in that** springs (39) are arranged between holding-down device (24) and base (30) of the pot (25).

10. Moulding and punching tool according to claim 5, **characterised in that** the cutting edges (43) are arranged directly at the collar (37) of the holding-down device (24).

11. Moulding and punching tool according to claim 5, **characterised in that** the cutting edges (45) are part of cutting knives (44) locally inserted into the collar (37) of the holding-down device (24).

12. Moulding and punching tool according to claim 5, **characterised in that** the cutting edges (47) are part of a ring (46) placed on the underside of the holding-down device (24).

## Revendications

1. Procédé pour fabriquer un récipient (9) en feuille synthétique thermoplastique à l'aide d'un outil combiné de formage et d'estampage, selon lequel un segment d'une bande en feuille (3) est tendu en fermant l'outil de formage et d'estampage, est déformé par la différence de pression des récipients (9), est sectionné par une levée d'estampage de l'outil de formage et d'estampage et est éjecté de celui-ci,
**caractérisé en ce que**
lorsque l'outil de formage et d'estampage se ferme, le bord du récipient est localement découpé par le côté supérieur (40) du poinçon de découpage (13) grâce à l'interaction d'une ou de plusieurs arêtes de coupe (33) disposées dans la matrice (21) à l'intérieur du contour d'estampage (38).

2. Procédé selon la revendication 1,
**caractérisé en ce que**
lorsque l'outil de formage et d'estampage se ferme, le découpage est réalisé sur toute l'épaisseur de la feuille synthétique thermoplastique (3) qui forme le bord du récipient.

3. Procédé selon la revendication 1,
**caractérisé en ce que**
lorsque l'outil de formage et d'estampage se ferme, le découpage est réalisé sur une partie de l'épaisseur de la feuille synthétique thermoplastique (3) qui forme le bord du récipient et le reste de l'épaisseur de la feuille est sectionné lorsque les récipients (9) sont estampés.

4. Procédé selon l'une des revendications 1 à 3,
**caractérisé en ce que**
lorsque l'outil de formage et d'estampage se ferme, une déformation de la zone à sectionner de la feuille synthétique thermoplastique (3) est réalisée dans un évidement (43) en forme de poche situé dans le poinçon de découpage (13).

5. Outil de formage et d'estampage pour exécuter le procédé selon l'une des revendications 1 à 4, composé d'une partie inférieure (11) comportant les parties façonnantes et les poinçons de découpage (13) et d'une partie supérieure (10) comportant une matrice (21) avec des contours d'estampage correspondants,
**caractérisé par**
des arêtes de coupe (33, 43, 45, 47) disposées à l'intérieur de chaque contour d'estampage (38) à un ou plusieurs endroits de la partie supérieure (10) et en face du côté supérieur (40) du poinçon de découpage (13) dont l'intérieur présente la forme du récipient (9).

6. Outil de formage et d'estampage selon la revendication 5,
**caractérisé en ce que**
les arêtes de coupe (33) sont disposées sur le côté inférieur de la paroi latérale (32) d'un pot (25).

7. Outil de formage et d'estampage selon la revendication 6,
**caractérisé en ce que**
la paroi latérale (32) du pot (25) est guidée sur le contour extérieur du serre-flan (24) disposé dans le pot (25) et le serre-flan (24) présente un épaulement (37) qui s'étend jusqu'au contour d'estampage (38) et comporte des évidements dans la zone des arêtes de coupe (33).

8. Outil de formage et d'estampage selon la revendication 6 ou 7,
**caractérisé en ce que**
le pot (25) est maintenu élastiquement de façon souple dans la partie supérieure (10).

9. Outil de formage et d'estampage selon l'une des revendications 6 à 8,
**caractérisé en ce que**
des ressorts (39) sont disposés entre le serre-flan (24) et le fond (30) du pot (25).

10. Outil de formage et d'estampage selon la revendication 5,
**caractérisé en ce que**
les arêtes de coupe (43) sont disposées directement sur l'épaulement (37) du serre-flan (24).

11. Outil de formage et d'estampage selon la revendication 5,
**caractérisé en ce que**
les arêtes de coupe (45) sont une partie de couteaux de coupe (44) localement insérés dans l'épaulement (37) du serre-flan (24).

12. Outil de formage et d'estampage selon la revendication 5,
**caractérisé en ce que**
les arêtes de coupe (47) sont une partie d'un anneau (46) placé sur le côté inférieur du serre-flan (24).
